# EUROPEAN PATENT APPLICATION

(11) **EP 1 528 495 A2**
(43) Date of publication of application: **04.05.2005**
(21) Application number: 04025824.6
(22) Date of filing: 29.10.2004
(51) Int. Cl.: G06F 17/60

(54) **Self-adjusting and context-aware system for expense minimization**

(30) Priority: 31.10.2003 US 697091
(71) Applicant: SAP Aktiengesellschaft, 69190 Walldorf (DE)
(72) Inventor: Ebert, Peter S., Menlo Park CA 94025 (US)
(74) Representative: Müller-Boré & Partner Patentanwälte

(57) **Abstract**

Expense data is accessed for one or more expense types. An initial average expense is computed for one or more of the expense types and the computed average expenses are presented to a user. A user selection is received of an item corresponding to an expense type, and expense data for the item is entered. An updated average expense is computed for the expense type associated with the item based upon the expense data for the item.

## Description

### TECHNICAL FIELD

This disclosure relates to a self-adjusting context aware expense system.

### BACKGROUND

Businesses typically desire to lower expenses in order to stay competitive. Rigorous, unilateral cost cutting measures or the establishment of absolute cost ceilings may yield acceptable results in the short term. However, in the mid to long term, such measures have the potential to lower employee satisfaction and productivity, thus endangering the competitiveness of businesses.

One technique for cost cutting is the unilateral setting of maximum allowed amounts for target costs. The unilateral cost ceiling may be set globally, or regional variations may be allowed. For example, cost ceilings may be set globally for certain travel expenses such as hotel rooms and meal costs. The ceilings may be uniform or may vary by geographic region such as country, state/province, or city. The ceilings may be set without due consideration of actual costs and without consideration of the quality of the goods and services purchased. Also, once set, the cost ceilings are not updated with sufficient regularity to reflect changes in costs due to factors such as inflation, deflation, and seasonal variations. Also, the cost ceilings do not account for specials that may be offered from time to time by the suppliers of goods and services.

Employees may become demoralized by the setting of unrealistic cost ceilings. Further, the setting of a static cost ceiling provides no incentive for an employee to seek further measures to reduce costs. Thus, short term cost cutting results may be achieved, but further benefits will not be realized in the mid to long term. Also, static cost ceilings do not provide management with effective reporting tools to track the expense activity, set appropriate cost guidelines, and motivate employees to look for further cost cutting opportunities.

### SUMMARY

Implementations described below provide techniques for enabling a business to minimize expenses in the short term, while minimizing negative side effects in the mid to long term. A self-adjusting and context-aware method and system are disclosed to drive down expenses while also minimizing the negative side effects from the expense minimization. The system may be used in the context of various expenses encountered by a business or by an individual. For example, the system may be used to track and encourage the lowering of travel expenses, overhead expenses, administrative expenses, business development expenses, training expenses, recruiting expenses, entertainment expenses, and acquisition/purchasing expenses for purchasing goods and services, among others. A single system may be used to monitor the various expenses, or separate systems may be used as desired. The system may be integrated with existing purchasing, portal, and expense tracking systems, e.g., by proposing a modular, add-on system structure and business process.

The expense behavior of one expense producing party is quantified relative to the dynamically computed average expense behavior of a group of expense producing parties. For example, the average price of a specific service or asset may be computed based upon purchases made within in a specific geographic region, within a specific period of time (e.g., the last three weeks). The price may be computed for all employees or for certain employees, groups of employees, or organizations within the business. The average price is continually computed and updated as new data is received.

Since the average costs for assets or services are derived from real-life transactions, these averages can be used as automatically self-adjusting, realistic target limits for cost cutting measures. This helps to minimize frustration among employees that would otherwise be caused by unrealistic cost cutting demands based on incorrect cost target data or false estimates of costs. At the same time, fraud may be detected by, for example, deploying software agents to search for specific patterns or exceptions in the available data pool.

Cost saving behavior is incentivized and rewarded. For example, when an employee acquires the service or asset for a lower amount than its current average price, the employee may be credited with a "point" for each dollar saved. Accumulated points may then be turned into a benefit, as typically selected the company. Benefits may include, for example, bonus payments, additional holidays, additional time off, or perks such as reserved parking privileges. The reward system may be implemented similarly to mileage programs of air carriers or point programs of hotel chains.

A "specific reporting" feature of the system allows management to gain granular insights into where costs are saved within the organization. This reporting feature also allows cost saving employees to gain positive visibility within the organization, thus motivating others to follow suit.

In one implementation, expense producing parties are able to share ratings of the received services or assets to provide not only cost-savings-driven metrics, but also quality-driven metrics. Data on where and how assets have been acquired are typically made available to all internal parties, so as to ensures re-use of well-proven purchasing sources as well as encouraging expense producing parties to find new, even better deals in order to gather "points". The quality driven metrics may be combined with the cost savings metrics in order to provide a best value purchase to the organization.

In another implementation, providers of goods and services are able to preemptively offer their specific goods and services to purchasing parties, thus shortening the latency of the system detecting sound opportunities. For example, a service provider may offer a "special" price for a given service if purchased during a specific period of time or in a specific quantity.

Also, contextual data may be incorporated to account for factors that typically affect the pricing of assets or services such as, for example, seasons, special events, special locations, etc.

By allowing enterprise applications to access the continually gathered data, a variety of additional benefits can be realized such as, for example, better cost forecasting and planning, faster and more effective purchasing processes, and sharing of current and anticipated demand data with providers, among other business benefits.

According to one general aspect, expense data is accessed for one or more expense types. An initial average expense is computed for one or more of the expense types and the computed average expenses are presented to a user. A user selection is received of an item corresponding to an expense type, and expense data for the item is entered. An updated average expense is computed for the expense type associated with the item based upon the expense data for the item.

Implementations may include one or more of the following features. For example, the expense data may be provided. The expense data may include, for example, an expense type, an expense amount, an expense date and an expense location. Ratings data may be provided and associated with the expense data. The presentation to the user may be based at least in part on the ratings data. Context data may be provided and associated with the expense data. The presentation to the user may be based at least in part on the context data. The context data may include special events data, weather data, local data, and an specific expense limit. Also, user data may be provided and associated with the expense data. The presentation to the user may be based at least in part on the user data. The user data may include a user preference, a user purchase history, and a user reward point total. Service data may be provided and associated with the expense data. The presentation to the user may be based at least in part on the service data. The service data may include an offer, a special offer, and a local standard cost. The expense data may be reported to the user, and may include exception reporting and forecasting based upon the expense data.

The expense data may be accessed, for example, by pulling the expense data from a data store. The expense data may include travel expense data and may be accessed from a travel expense application. The expense data may include asset purchasing data and may be accessed from an asset purchasing application.

The expense data may be analyzed to determine cost savings. A difference may be calculated between the expense data for the item and the initial average expense for the expense type associated with the item, and a reward may be provided to the user based upon the calculated difference. A difference may be calculated between the expense data for the item and the initial average expense for the expense type associated with the item, a number of points may be assigned corresponding to the difference and the points may be associated with the user. A reward may be provided to the user based upon the number of points.

In another general aspect, an apparatus may include a smart expense application running on a host device. The smart expense application is configured to access expense data in a database, compute initial average expense data based upon the accessed expenses data, present the initial average expense data to the client device, display the initial average expense data to a user, receive a user selection to order an item comprising an expense, receive expense data for the item, and compute an updated average expense upon the expense data for the item.

Implementations may include one or more of the following features. For example, the smart expense application may be further configured to access the expense data in an application, to access user data, to access service data, and to access context data. The smart expense application may be further configured to interface with other applications.

The smart expense application may be configured to calculate a difference between the expense data for the item and the initial average expense for the expense type corresponding to the item and assign a number of points corresponding to the difference. The smart expense application may be further configured to provide a reward to the user based upon the number of points.

The details of one or more implementations are set forth in the accompanying drawings and the description below. Other features will be apparent from the description and drawings, and from the claims.

### DESCRIPTION OF DRAWINGS

Fig. 1 is a diagram of a self-adjusting context aware expense system.
Fig. 2 is an exemplary set of expense data that may be used by the system of Fig. 1.
Fig. 3 is an exemplary flow diagram of a method for reducing expenses using the system of Fig. 1.

### DETAILED DESCRIPTION

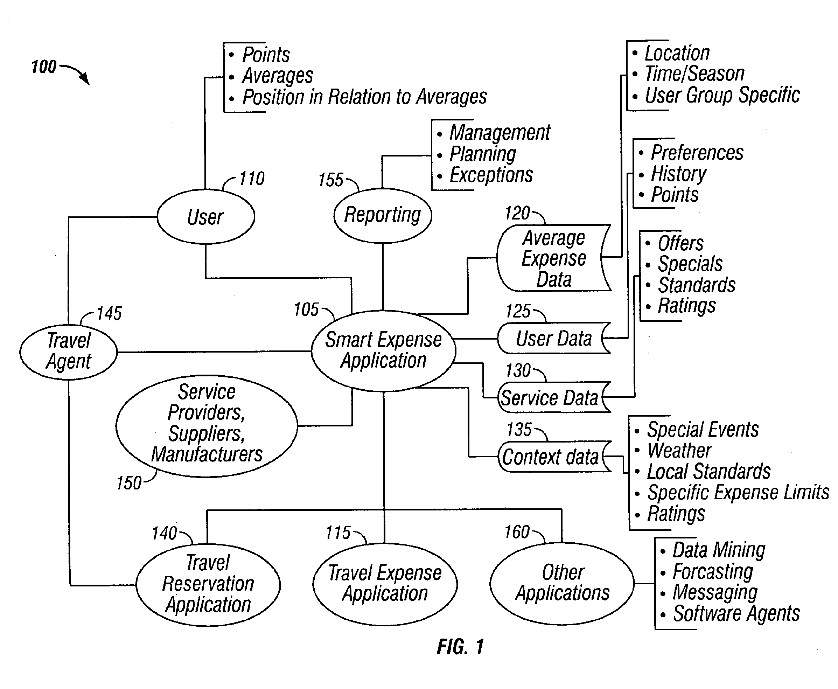

Fig. 1 shows an example of a self-adjusting context aware expense system 100. The system 100 includes a smart expense application 105 configured to interact with a user 110. The smart expense application 105 typically is a software application running on a general purpose computer. In one implementation, the smart expense application 105 may reside on a host computer in a client / host architecture. The user 110 may include a client computer in a client / host architecture. In another implementation, the smart expense application 105 may reside on a client computer, which may be the same client computer employed by the user 110 or may be a different client computer in communication with the user 110.

A client computer or a host computer may include one or more general-purpose computers (e.g., personal computers), one or more special-purpose computers (e.g., devices specifically programmed to communicate with each other and/or the client system or the host system), or a combination of one or more general-purpose computers and one or more special-purpose computers. Other examples include a mobile device, including a mobile phone or a personal digital assistant (PDA), a workstation, a server, a device, a component, other physical or virtual equipment, or some combination of these capable of responding to and executing instructions. The client computer and the host computer may include devices that are capable of establishing peer-to-peer communications. The client computer and the host computer may be arranged to operate within or in concert with one or more other systems, such as, for example, one or more LANs ("Local Area Networks") and/or one or more WANs ("Wide Area Networks").

The client computer may communicate with the host computer over a communications link. A communications link typically includes a delivery network that provides direct or indirect communication between the client computer and the host computer, irrespective of physical separation. Examples of a delivery network include the Internet, the World Wide Web, WANs, LANs, analog or digital wired and wireless telephone networks (e.g., Public Switched Telephone Network (PSTN), Integrated Services Digital Network (ISDN), and Digital Subscriber Line (xDSL)), radio, television, cable, or satellite systems, and other delivery mechanisms for carrying data including, for example, a wired, wireless, cable or satellite communication pathway.

An example of the smart expense application 105 is a software application loaded on a client computer or a host computer for commanding and directing communications enabled by the client computer or the host computer. Other examples include a program, a piece of code, an instruction, a device, a computer, a computer system, or a combination of these for independently or collectively instructing a computer to interact and operate as described. The smart expense application 105 may be embodied permanently or temporarily in any type of machine, component, physical or virtual equipment, storage medium, or propagated signal capable of providing instructions to the client computer and the host computer.

As shown, the smart expense application 105 is configured to access travel expense report data. In one implementation, the travel expense report data is part of the travel expense application 115. The travel expense application 115 may be a separate software application for maintaining travel expense data. In another implementation, the travel expense report data may be contained in a separate database, or the travel expense application 115 may be simply a database of travel expense report data. Travel expense reports, by their nature, contain detailed information about costs that were actually incurred. The information may include expense type, location and time. The smart expense application 105 typically is configured to compute the average costs for each expense type and location within a specific time period, using the accessed travel expense data.

In other implementations, the smart expense application 105 may be configured to access additional expense data or different expense data altogether. For example, the smart expense application 105 may be configured to access computer equipment purchasing data from external sources in addition to or in place of accessing travel expense data. The travel expense application 115 may be eliminated or supplemented with other applications 160, including applications that provide different expense data.

The smart expense application 105 may compute average costs for various expense types and store the average expense data 120 in a database or other data store. The smart expense application may, for example, read, write, or modify the average expense data 120. Similarly, the smart expense application 105 may read, write, or modify user data 125, service data 130, and context data 135. Service providers, suppliers, and manufacturers 150 may provide data to the smart expense application 105 or may cause data to be stored in a database or other data store for later use. The smart expense application 105 may communicate with a travel reservation application 140 and with a travel agent 145. A reporting function 155 may be provided for reporting items to management.

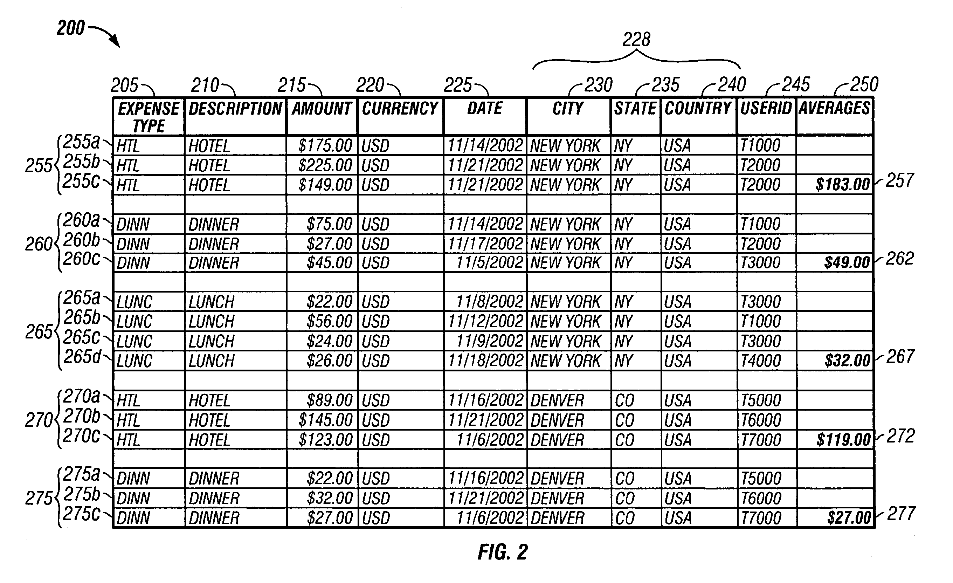

Referring now to Fig. 2, an example of travel expense report data 200 is shown. The travel expense report data 200 may be contained as a record within the travel expense application 115. The data 200 includes an expense type 205, a description 210 of the expense, an expense amount 215, a currency type 220, an expense date 225, an expense location 228 including a city 230, state 235, and country 240, and a user identity 245 of the person incurring the expense.

In the example of Fig. 2, the data 200 may be organized according to expense type 205 and location 228. In particular the data 200 includes three entries 255a, 255b, and 255c for hotel expense data 255 in New York, NY, three entries 260a, 260b, and 260c for dinner expense data 260 in New York, NY, four entries 265a, 265b, 265c, and 265d for lunch expense data 265 in New York, NY, three entries 270a, 270b, and 270c for hotel expense data 270 in Denver, CO, and three entries 275a, 275b, and 275c for dinner expense data 275 in Denver, CO.

The smart expense application 105 may compute the average costs 250 for an expense type 205, location 228, and date 225. As shown in Fig. 2, the average price 257 of a hotel room in New York, NY, USA in Nov 2002 for one night is $183.00. The average price 257 is computed using the hotel expense data 255. The average price 262 of a dinner in New York, NY, USA in Nov 2002 is $49.00, and is computed using the dinner expense data 260. The average price 267 of a lunch in New York, NY, USA in Nov 2002 is $32.00, and is computed using the lunch price data 265. The average price 272 of a hotel room in Denver, CO, USA in Nov 2002 for one night is $119.00, and is computed using the hotel price data 270. Finally, the average price 277 of a dinner in Denver, CO, USA in Nov 2002 is $27.00 and is computed using the dinner price data 275.

Referring to Figs. 1 and 2, as new expense data is entered, the smart expense application 105 computes the average costs. The averages costs 250 may be saved as average expense data 120 in a database or other data store. The average expense data 120 may be stored locally on the same computer or computers with the smart expense application 105, or may be stored remotely from the smart expense application 105. The smart expense application 105 may continually compute the average costs, periodically computer the average costs, or compute the average costs when a certain event occurs, such as the addition of new data or by a user entered command. The average expense data 120 may include average expense data for the various types of expenses managed by the smart expense application 105. The average expense data 120 may include averaged data by one or more of location, time, season, or user or user group.

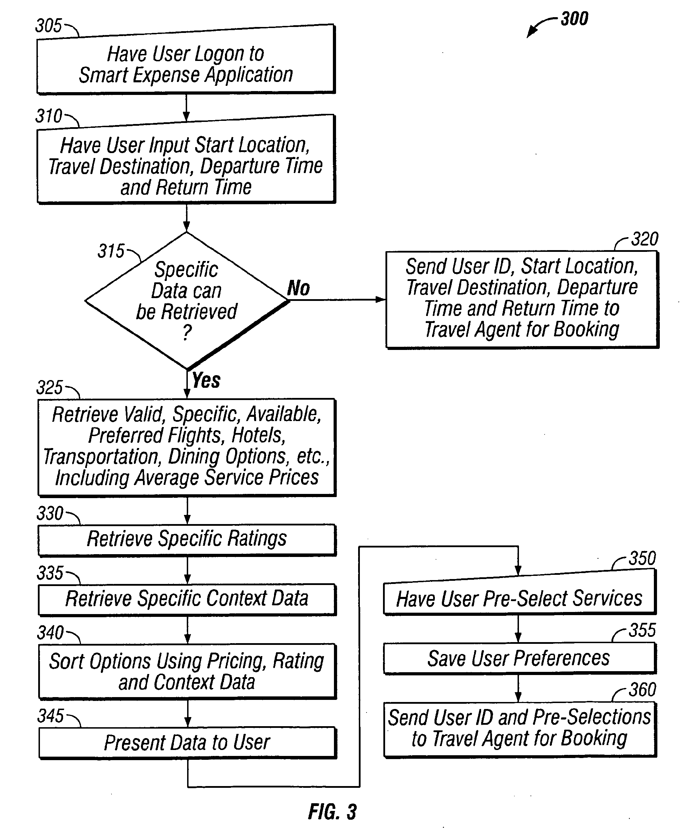

Fig. 3 illustrates an exemplary process 300 using the system 100 of Fig. 1. In the process 300, the user 110 first connects to the smart expense application 105 prior to making travel arrangements (step 305). The user 110 then inputs information such as a travel destination and departure time, and may also input a start location and return time (step 310). Other data such as arrival times also may be input.

A decision is made as to whether specific data may be retrieved (step 315). If not, the information such as user identity, destination, departure time, start location and return time are sent to a travel agent 145 for booking (step 320).

If specific data may be retrieved (step 325), then the smart expense application 105 will present the known, specific average expense data 250 to the user 110, so that the user 110 may review the data and become familiar with the specific cost structures at the chosen travel destination and time.

The smart expense application 105 may access user data 125. The user data 125 may be stored locally on the same computer or computers with the smart expense application 105, or may be stored remotely from the smart expense application 105. In one implementation, the user data 125 may contain information such as a job profile, title or category, user preferences, travel history, and expense savings points accumulated by the user. Based on the user data 125 and the average expense data 120, the smart expense application 105 will also propose the currently known and available, most affordable, yet well-rated specific options, e.g. food and hotel options, for the chosen travel destination and time. The smart expense application 105 may have access to real-time service availability checks. For example, by accessing the travel reservation application 140, real time information such as hotel, flight, car rental, and restaurant availability information may be obtained and presented to the user 110.

Service ratings for the goods or services may be retrieved (step 330). Service ratings for goods or services may be submitted after thee goods are purchased or the services are rendered. The smart expense application 105 may store these service ratings in various locations. For example, the service ratings may be stored as part of service data 130 or as part of context data 135. The service data 130 and/or the context data 135 may be stored locally on the same computer or computers with the smart expense application 105, or may be stored remotely from the smart expense application 105. The service ratings may be used by the smart expense application 105 in providing a recommendation to the user 110 based upon a "best value" approach by factoring in both cost and quality. For example, the lowest cost provider may not offer the best value purchase because of poor quality, which may necessitate further costs to be incurred in order to realize the expected value of the purchase.

The smart expense application 105 may also present additional specific service offerings to the user 110 that are derived from accessing service data 130. Service providers, suppliers, or manufacturers 150, among others, may input the service data 130. The service data 130 may include, for example, offers, specials, information, advertisements, or standard costs associated with the goods or services.

Specific context data also may be retrieved (step 335). The smart expense application 105 may also access and present additional context data derived from context data 135. The context data 135 may include, for example specific weather, special event, seasonal data, specific expense limits, or local data that may affect the pricing of goods and services at the travel destination in the targeted time.

The smart expense application sorts options using the pricing, rating, and/or context data (step 340) and presents the data to the user (step 345).

The smart expense application 105 will then allow the user 110 to pre-select desired options, if applicable (step 350). User preferences entered may also be saved (step 355).

Upon entering the required data, the user 110 may start with the standard reservation process based on the pre-selected data (step 360). For example, the user 110 may proceed with making the reservation using a travel agent 145 or a self-service travel reservation application 140.

After the travel is completed, the user 110 submits a travel expense report to the travel expense application 115. Upon submitting the travel expense report to the travel expense application 115, the smart expense application 105 will compute the new average expense data 250 and will calculate the number of points that the user 110 gained by purchasing goods and services that were cheaper than the specific average expenses, if applicable. In another implementation, the smart expense application 105 may compute the new average expense data 250 when the user 110 completes the reservation process and new expense data is available based upon that transaction.

For example, if the user 110 submits a travel expense report for a one day trip to New York, NY, USA in November of 2002 paying $163 for a hotel room, this data would be stored with the travel expense data 200 and may be associated with the New York Hotel expenses 255. The new average price 257 would be computed based upon the new expense of $163 and the pre-existing data 255a, 255b, and 255c. Thus, after the data is entered, the new average price 257 would be $178. The user 110 would gain 20 points (former average price of $183 minus the actual expense of $163), assuming that the points are computed as one point for each dollar saved from the average applicable hotel expense 257. For the next user traveling to New York, the new average hotel expense 257 would be computed as $178. Thus, the system 100 is self-adjusting and context aware. The system 100 dynamically updates the averages costs and encourages cost saving behavior by users. A variety of point and award rules may be implemented.

If prices were to rise due to, for example, a general increase in the cost of obtaining the goods or services, this trend would be captured by the system 100. Thus, the numbers used by the system 100 reflect reality, and users are incentivized, not penalized for cost saving behavior in an inflationary market.

The smart expense application 105 is able to maintain and present a statement of the point account of the user 110 upon request. For example, the point account balance may be presented to the user 110 using the reporting 155 feature of the system 100. The reporting 155 feature may also be used for other reporting, forecasting and planning functions. For example, the reporting 155 feature may be used for in-depth reporting across user groups, destinations, and expense types and may be used to generate reports for upper management. Also, the reporting 155 feature may be used for real-time exception reporting when costs change dramatically in a specific segment, for example to report an inflationary market in certain goods and services in a certain geographic location.

The smart expense application 105 also may be configured to interfaces to other applications 160. The other applications 160 may include other expense applications, data mining applications, forecasting applications, real-time exception messaging applications, and/or software agent-based applications such as fraud detection agent applications. For example, based on data derived from the smart expense application 105 using data mining, the location or time for an annual business conference may be changed due to a better-forecasted Return On Investment (ROI) at a newly identified location or time.

A number of implementations have been described. Nevertheless, it will be understood that various modifications may be made. Accordingly, other implementations are within the scope of the following claims.

Accordingly, there is provided a method comprising the following steps: accessing expense data for one or more expense types; computing an initial average expense for one or more of the expense types; presenting the computed average expenses to a user; receiving a user selection of an item corresponding to an expense type; entering expense data for the item; and computing an updated average expense for the expense type associated with the item based upon the expense data for the item.

Preferably, the method further comprises: providing ratings data; and associating the ratings data with the expense data.

Further preferably, presenting comprises presenting based at least in part on the ratings data.

Moreover, the method further comprises: providing context data; and associating the context data with the expense data, wherein presenting preferably comprises presenting based at least in part on the context data.

Preferably, context data comprises one or more of special events data, weather data, local data, and a specific expense limit.

Further preferably, the method further comprises providing user data and associating the user data with the expense data, wherein presenting preferably comprises presenting based at least in part on the user data and/or wherein the user data preferably comprises one or more of a user preference, a user purchase history, and a user reward point total.

Still further preferably, the method further comprises providing service data and associating the service data with the expense data, wherein presenting preferably comprises presenting based at least in part on the service data and/orwherein the service data preferably comprises one or more of an offer, a special offer, and a local standard cost.

Most preferably, the method further comprises reporting the expense data to the user, wherein the reporting preferably comprises exception reporting based upon the expense data and/or wherein the reporting preferably comprises forecasting based upon the expense data.

According to a further preferred embodiment, the method further comprises:
calculating a difference between the expense data for the item and the initial average expense for the expense type associated with the item; and
providing a reward to the user based upon the calculated difference.

Preferably, the method further comprises:
calculating a difference between the expense data for the item and the initial average expense for the expense type associated with the item;
assigning a number of points corresponding to the difference; and
associating the points with the user.

Further preferably, the method further comprises providing a reward to the user based upon the number of points.

Still further preferably the method further comprises analyzing at least a portion of the expense data to detect fraudulent activities, wherein analyzing the expense data preferably comprises deploying a software agent and/or wherein analyzing the expense data preferably comprises detecting a pattern in the data.

Further preferably, analyzing the expense data comprises detecting an exception in the data.

Most preferably, the method further comprises presenting at least a portion of the expense data to the user.

## Claims

1. An apparatus comprising a storage medium having instructions stored thereon, the instructions including:
a first code segment for accessing expense data for one or more expense types;
a second code segment for computing an initial average expense for one or more of the expense types;
a third code segment for presenting the computed average expenses to a user;
a fourth code segment for receiving a user selection of an item corresponding to an expense type;
a fifth code segment for entering expense data for the item;
a sixth code segment for computing an updated average expense for the expense type corresponding to the item based upon the expense data for the item; and
a seventh code segment for analyzing the expense data to determine cost savings.

2. The apparatus of claim 2, further comprising an eighth code segment for providing ratings data and a ninth code segment for associating the ratings data with the expense data.

3. The apparatus of claim 2, wherein the second code segment is configured to compute the average based at least in part on the ratings data.

4. The apparatus of claim 2 or 3, wherein the sixth code segment is configured to compute the average based at least in part on the ratings data.

5. The apparatus of one of the preceding claims, further comprising an eighth code segment for providing context data and a code segment for associating the context data with the expense data.

6. The apparatus of one of the preceding claims, wherein the second code segment is configured to compute the average based at least in part on the context data.

7. The apparatus of one of the preceding claims, wherein the sixth code segment is configured to compute the average based at least in part on the context data.

8. The apparatus of one of the preceding claims, further comprising an eighth code segment for providing user data and a ninth code segment for associating the user data with the expense data.

9. The apparatus of claim 8, wherein the second code segment is configured to compute the averages based at least in part on the user data.

10. The apparatus of claim 8 or 9, wherein the sixth code segment is configured to compute the averages based at least in part on the user data.

11. The apparatus of one of the preceding claims, further comprising an eighth code segment for providing service data and a ninth code segment for associating the service data with the expense data.

12. The apparatus of claim 11, wherein the second code segment is configured to compute the average based at least in part on the service data.

13. The apparatus of claim 11 or 12, wherein the sixth code segment is configured to compute the average based at least in part on the service data.

14. The apparatus of one of the preceding claims, wherein the seventh code segment for analyzing the expense data comprises:
an eighth code segment for calculating a difference between the expense data for the item and the initial average expense for the expense type corresponding to the item; and
a ninth code segment for providing a reward to the user based upon the calculated difference.

15. The apparatus of one of the preceding claims, wherein the seventh code segment for analyzing the expense data comprises:
an eighth code segment for calculating a difference between the expense data for the item and the initial average expense for the expense type corresponding to the item;
a ninth code segment for assigning a number of points corresponding to the difference; and
a tenth code segment for associating the points with the user.

16. The apparatus of claim 15, further comprising an eleventh code segment for providing a reward to the user based upon the number of points.

17. An apparatus comprising:
a smart expense application running on a host device, wherein the smart expense application is configured to:
access expense data in a database;
compute initial average expense data based upon the accessed expenses data;
present the initial average expense data to a client device configured to communicate with the smart expense application;
display the initial average expense data to a user;
receive a user selection to order an item comprising an expense;
receive expense data for the item; and
compute an updated average expense upon the expense data for the item.

18. The apparatus of claim 17 wherein the smart expense application is further configured to access user data and present the initial average expense data based upon the user data.

19. The apparatus of claim 17 or 18, wherein the smart expense application is further configured to access service data and present the initial average expense data based upon the service data.

20. The apparatus of claim 17, 18 or 19, wherein the smart expense application is further configured to access context data and present the initial average expense data based upon the context data.

21. The apparatus of one of the preceding claims 17 to 20, wherein the smart expense application is further configured to calculate a difference between the expense data for the item and the initial average expense for the expense type corresponding to the item and assign a number of points corresponding to the difference.

22. The apparatus of claim 21, wherein the smart expense application is further configured to provide a reward to the user based upon the number of points.
